# EUROPÄISCHE PATENTANMELDUNG

(11) **EP 0 997 353 A2**
(43) Veröffentlichungstag der Anmeldung: **03.05.2000**
(21) Anmeldenummer: 99118509.1
(22) Anmeldetag: 18.09.1999
(51) Int. Cl.: B60R 21/20, B60R 21/04

(54) **Rohbaukarosserie für ein Kraftfahrzeug**

(30) Priorität: 27.10.1998 DE 19849489
(71) Anmelder: DaimlerChrysler AG, 70567 Stuttgart (DE)
(72) Erfinder: Bacher, Werner, 71067 Sindelfingen (DE); Hirth, Andreas, 69234 Diehlheim (DE); Turner, Ian, 71272 Renningen (DE)

(57) **Zusammenfassung**

Es ist bekannt, einer selbsttragenden Fahrgastzelle im Bereich von Dachrahmenabschnitten aufblasbare Kopfschutzeinheiten zuzuordnen, wobei auf Höhe jeder aufblasbaren Kopfschutzeinheit ein energieabsorbierendes Formteil als Kopfaufschlagschutz vorgesehen ist.

Erfindungsgemäß ist das Formteil (10) als Schießrampe zur Führung eines expandierenden Luftsackes der Kopfschutzeinheit (8) in die gewünschte Schutzposition gestaltet und derart angeordnet, daß das Formteil während der Expansion des Luftsackes zumindest weitgehend formstabil positioniert bleibt.

Einsatz für Personenkraftwagen.

## Beschreibung

Die Erfindung betrifft eine Rohbaukarosserie für ein Kraftfahrzeug mit im Bereich einer Fahrgastzelle oberhalb von Fensterausschnitten angeordneten Dachrahmenabschnitten, denen aufblasbare Kopfschutzeinheiten zugeordnet sind, wobei auf Höhe jeder aufblasbaren Kopfschutzeinheit ein energieabsorbierendes Formteil als Kopfaufschlagschutz vorgesehen ist.

Eine solche Rohbaukarosserie für ein Kraftfahrzeug ist aus der DE 196 12 227 A1 bekannt. Die selbsttragende Rohbaukarosserie weist eine Fahrgastzelle auf, die oberhalb von Seitentürausschnitten mit seitlich angeordneten Dachrahmenabschnitten versehen ist. An den Dachrahmenabschnitten sind aufblasbare Kopfschutzeinheiten angeordnet, die jeweils mit einem sich bei einem Fahrzeugaufprall schlagartig entfaltenden Luftsack versehen sind. Der jeweilige Luftsack expandiert vom Dachrahmenbereich aus nach unten, um das Aufschlagen des Kopfes eines Fahrzeuginsassen auf einen Türrahmenbereich oder den Dachrahmenabschnitt oder eine Seitenscheibe der entsprechenden Seitentür bei einem Fahrzeugseitenaufprall aufzufangen. Um zu gewährleisten, daß ein gewisser Kopfschutz während des Auftreffens eines Kopfes bei nicht expandierender Kopfschutzeinheit gegeben ist, ist auf Höhe der aufblasbaren Kopfschutzeinheit ein separates Deformationselement vorgesehen, das den Luftsack der Kopfschutzeinheit einfaßt und in seiner zusammengelegten Stellung hält. Das Deformationselement wird bei der schlagartigen Expansion des Luftsackes deformiert und gibt so den Weg für den Austritt des expandierenden Luftsackes nach unten frei.

Aufgabe der Erfindung ist es, eine Rohbaukarosserie der eingangs genannten Art zu schaffen, die einen verbesserten Aufprallschutz für den Kopf eines Fahrzeuginsassen bietet.

Diese Aufgabe wird dadurch gelöst, daß das Formteil als Schießrampe zur Führung eines expandierenden Luftsackes der Kopfschutzeinheit in die gewünschte Schutzposition gestaltet und derart angeordnet ist, daß das Formteil während der Expansion des Luftsackes zumindest weitgehend formstabil positioniert bleibt.

Durch die erfindungsgemäße Lösung wird eine gezielte Führung des expandierenden Luftsackes erreicht, so daß dieser zuverlässig in die geeignete Schutzposition überführbar ist. Das Formteil weist somit eine Doppelfunktion auf, da neben der Funktion als Schießrampe auch die energieabsorbierende Funktion bei einem Kopfaufprall und nicht expandiertem Luftsack gewährleistet bleibt. Dabei ist das Formteil derart angeordnet und geformt, daß die durch den schlagartig expandierenden Luftsack auftretenden Kräfte zumindest weitgehend formstabil aufgenommen werden, gleichzeitig jedoch die durch einen Kopfaufprall entstehenden Kräfte aus entsprechend unterschiedlicher Richtung zu einer Deformation des Formteiles bei gleichzeitiger Energieabsorption führen.

In Ausgestaltung der Erfindung ist das Formteil derart flankierend zu der Kopfschutzeinheit angeordnet, daß eine Zugänglichkeit zu der Kopfschutzeinheit gewährleistet ist. Im Gegensatz zum Stand der Technik bildet das Formteil somit nicht die Abdeckung für den Luftsack, sondern gestattet einen Zugriff auf die Kopfschutzeinheit. Dem Luftsack der Kopfschutzeinheit muß somit noch eine zusätzliche, entfernbare Abdeckung oder Sicherung zugeordnet sein, die den Luftsack in der zusammengefalteten Position hält.

In weiterer Ausgestaltung der Erfindung ist das Formteil rohbauseitig mit einem Dachrahmenabschnitt verbunden. Diese Ausgestaltung ermöglicht vorteilhaft die Integration des Formteiles bereits bei der Herstellung der Rohbaukarosserie, wobei das Formteil mit dem entsprechenden Rohbauabschnitt entweder durch Montageelemente oder auch unlösbar durch Verschweißung verbunden werden kann.

In weiterer Ausgestaltung der Erfindung ist das Formteil als integraler Teil der Kopfschutzeinheit gestaltet. Dadurch ist das Formteil gemeinsam mit der Kopfschutzeinheit im Fahrzeug montierbar und vorzugsweise rohbauseitig an einem entsprechenden Dachrahmenabschnitt oder einem anderen, geeigneten Rohbauteil festlegbar. Durch die Integration des Formteiles an einem entsprechenden Gehäuse der Kopfschutzeinheit kann ein geringerer Montageaufwand beim Einbau der Kopfschutzeinheit in die Fahrgastzelle erzielt werden.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.

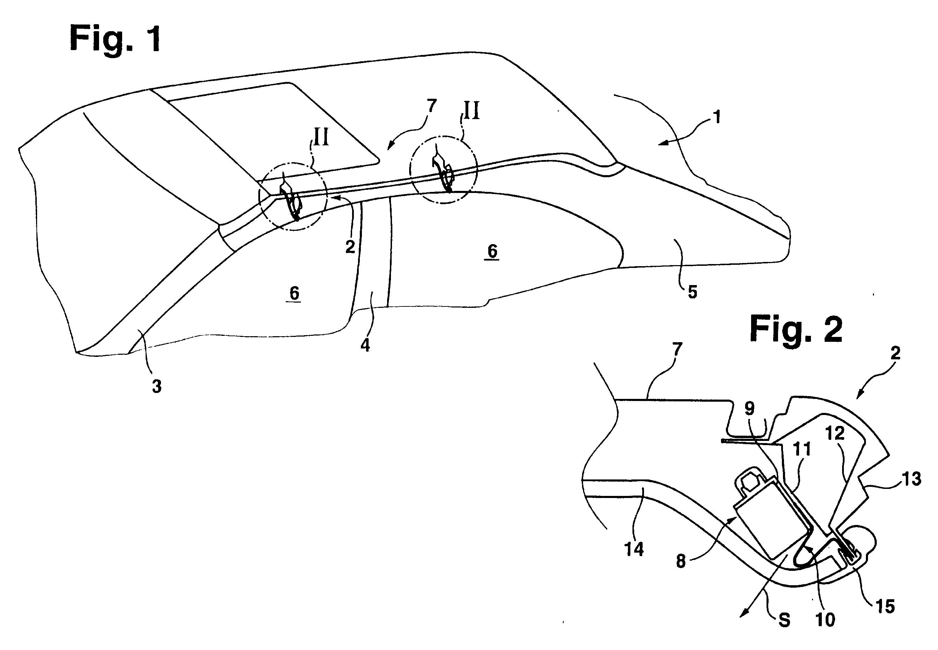

- Fig. 1: zeigt schematisch in perspektivischer Darstellung einen Fahrgastzellenabschnitt einer Ausführungsform einer erfindungsgemäßen Rohbaukarosserie oberhalb einer Gürtellinie des Personenkraftwagens und
- Fig. 2: in vergrößerter Darstellung einen Querschnitt durch einen Dachrahmenbereich der Rohbaukarosserie nach Fig. 1 auf Höhe der Ausschnitte II in Fig. 1.

Eine Rohbaukarosserie für einen Personenkraftwagen ist in grundsätzlich bekannter Weise selbsttragend ausgeführt und weist eine Fahrgastzelle 1 auf. Die Fahrgastzelle 1 ist in ebenfalls an sich bekannter Weise aus vorderen Tragsäulen 3 in Form von A-Säulen, mittleren Tragsäulen 4 in Form von B-Säulen und rückseitigen Tragsäulen 5 in Form von C-Säulen aufgebaut, wobei die Tragsäulen 3, 4, 5 in einem Dachbereich in eine Dachrahmenstruktur 2 münden. Neben seitlichen Dachrahmenabschnitten weist die Dachrahmenstruktur 2 in nicht näher dargestellter Weise mehrere Dachquerträger auf, die die ausreichende Versteifung zur gegenüberliegenden Fahrzeugseite bilden. Die Dachrahmenstruktur 2 ist mit einer Dachbeplankung 7 versehen. Zwischen den Tragsäulen 3, 4, 5 sind entsprechende Fensterausschnitte 6 für Seitenscheiben vorgesehen, wobei wenigstens zwischen A- und B-Säule die Fensterausschnitte 6 in seitlichen Fahrzeugtüren integriert sind. Nach unten münden die Tragsäulen 3, 4, 5 in ebenfalls bekannter Weise in eine Bodenstruktur.

Den Dachrahmenabschnitten 2 ist auf jeder Fahrzeugseite oberhalb der Fensterausschnitte 6 jeweils wenigstens eine Kopfschutzeinheit 8 zugeordnet. Die Kopfschutzeinheit 8 erstreckt sich wenigstens in Fahrzeuglängsrichtung über die Länge einer Sitzposition innerhalb der Fahrgastzelle. Bei Vorhandensein von lediglich einer einzelnen Kopfschutzeinheit 8 auf jeder Seite kann diese auch für front- und fondseitige Sitzpositionen gleichzeitig vorgesehen sein.

Die wenigstens eine Kopfschutzeinheit 8 weist einen schlagartig aufblasbaren Luftsack auf. Auf den grundsätzlichen Aufbau einer solchen Kopfschutzeinheit 8 wird nicht näher eingegangen, da dieser allgemein bekannt ist. Die Kopfschutzeinheit 8 weist einen stabilen Trägerwinkel 9 auf, der an einem energieabsorbierenden Blechformteil 10 festgelegt ist. Das Blechformteil 10 weist ein V-artiges Profil auf und nimmt den Trägerwinkel 9 im Bereich seines einen Schenkels auf. Mit dem gegenüberliegenden Schenkel ist das Blechformteil 10 rohbauseitig festgelegt, indem es mit entsprechenden Flanschen des als Dachholm gestalteten Dachrahmenabschnittes 2 verschweißt ist. Der Dachrahmenabschnitt 2 ist dreischalig aufgebaut, indem er eine Innenschale 11, eine Verstärkungsschale 12 und eine Außenschale 13 aufweist. Die drei Schalen 11 bis 13 sind sowohl im Bereich des Überganges zur Dachbeplankung 7 als auch in einem äußeren Verbindungsbereich über entsprechende Flansche miteinander verschweißt. In dem äußeren Verbindungsbereich ist auch das Blechformteil 10 mit angeschweißt, indem der entsprechende Schenkel des Blechformteiles 10, der ebenfalls einen Flansch darstellt, mit den Flanschen der Schale 11 bis 13 verbunden ist. Der V-förmige Profilabschnitt des Blechformteiles 10 erstreckt sich schräg nach unten und nach innen zur Fahrgastzelle hin, wobei seine der Kopfschutzeinheit 8 zugewandte Oberfläche eine Flanke nach Art einer Schießrampe bildet, um bei einem Fahrzeugaufprall den aufgrund einer entsprechenden Auslösung schlagartig expandierenden Luftsack in Pfeilrichtung S zu lenken und so eine definiert gerichtete Entfaltung des Luftsackes zu erzielen.

Das Blechformteil 10 ist zusätzlich derart geformt, daß bei einem Kopfaufschlag eines Fahrzeuginsassen auf diesen Dachrahmenbereich ohne eine vorherige Expansion des Luftsackes dieses Blechformteil 10 energieabsorbierend nachgibt und demzufolge deformiert wird.

Die Kopfschutzeinheit 8 einschließlich des Blechformteiles 10 und des Dachrahmenabschnittes 2 ist durch ein flächiges Schaum-oder Preßteil 14 verdeckt, das einen Dachhimmel für die Fahrgastzelle bildet. Das Schaum- oder Preßteil 14 stützt sich an dem V-Profilabschnitt des Blechformteiles 10 ab und ist bis zum Flanschbereich des Dachrahmenbabschnittes 2 im äußeren Verbindungsbereich fortgeführt. In diesem äußeren Verbindungsbereich wird das Schaum- oder Preßteil durch eine Kunststoffprofillasche 15 gehalten, die auf den Flanschbereich aufgesteckt ist. Bei einer Expansion des Luftsackes wird das nachgiebige Schaum- oder Preßteil nach unten weggedrückt, wobei es aus der Anlage zwischen dem V-Profilabschnitt des Blechformteiles 10 und der Kunststoffprofillasche 15 entfernt wird. Das Schaum- oder Preßteil 14 stellt der Expansion des Luftsackes jedoch keinen nennenswerten Widerstand entgegen, da es ohne größeren Kraftaufwand flexibel oder in anderer Form nachgiebig gestaltet ist.

## Patentansprüche

1. Rohbaukarosserie für ein Kraftfahrzeug mit im Bereich einer Fahrgastzelle oberhalb von Fensterausschnitten angeordneten Dachrahmenabschnitten, denen aufblasbare Kopfschutzeinheiten zugeordnet sind, wobei auf Höhe jeder aufblasbaren Kopfschutzeinheit ein energieabsorbierendes Formteil als Kopfaufschlagschutz vorgesehen ist,
**dadurch gekennzeichnet,** daß
das Formteil (10) als Schießrampe zur Führung eines expandierenden Luftsackes der Kopfschutzeinheit (8) in die gewünschte Schutzposition gestaltet und derart angeordnet ist, daß das Formteil (10) während der Expansion des Luftsackes zumindest weitgehend formstabil positioniert bleibt.

2. Rohbaukarosserie nach Anspruch 1,
**dadurch gekennzeichnet,** daß
das Formteil (10) derart flankierend zu der Kopfschutzeinheit (8) angeordnet ist, daß eine Zugänglichkeit zu der Kopfschutzeinheit (8) gewährleistet ist.

3. Rohbaukarosserie nach Anspruch 1,
**dadurch gekennzeichnet,** daß
das Formteil (10) rohbauseitig mit einem Dachrahmenabschnitt (2; 11, 12, 13) verbunden ist.

4. Rohbaukarosserie nach Anspruch 1,
**dadurch gekennzeichnet,** daß
das Formteil (10) als integraler Teil der Kopfschutzeinheit (8) gestaltet ist.

5. Rohbaukarosserie nach Anspruch 1,
**dadurch gekennzeichnet,** daß
das Formteil (10) aus Metallblech, vorzugsweise aus Stahlblech, gestaltet ist.

6. Rohbaukarosserie nach Anspruch 1,
**dadurch gekennzeichnet,** daß
das Formteil aus Kunststoff hergestellt ist.
